# EUROPEAN PATENT APPLICATION

(11) **EP 4 700 522 A1**
(43) Date of publication of application: **25.02.2026**
(21) Application number: 23948861.2
(22) Date of filing: 16.08.2023
(51) Int. Cl.: G05D 1/20

(54) **CONTROL METHOD AND CONTROL APPARATUS FOR MOBILE PLATFORM, MOBILE PLATFORM AND STORAGE MEDIUM**

(71) Applicant: SZ Zhuoyu Technology Co., Ltd., Shenzhen, Guangdong 518055 (CN)
(72) Inventor: ZHOU, You, Shenzhen, Guangdong 518055 (CN); QIU, Fan, Shenzhen, Guangdong 518055 (CN); ZHANG, Wei, Shenzhen, Guangdong 518055 (CN)
(74) Representative: Hautier IP - MC/EP
(86) International application number: PCT/CN2023/113408
(87) International publication number: WO 2025/035432

(57) **Abstract**

Disclosed are a control method and control apparatus for a mobile platform, a mobile platform, and a storage medium. The method includes: acquiring a target path along which the mobile platform moves; acquiring target information including high-definition map information and historical motion information, where the high-definition map information and the historical motion information are associated with the target path; and generating, based on the target information, a control instruction used for controlling the mobile platform to move along the target path. Regarding a mobile platform, a target path along which the mobile platform moves and target information which is associated with the target path and includes high-definition map information and historical motion information may be acquired, and a control instruction used for controlling the mobile platform to move along the target path may be generated flexibly based on the target information, such that the mobile platform may perform autonomous navigation along the target path more safely, rationally, and accurately.

## Description

### TECHNICAL FIELD

Embodiments of the present disclosure relate to the technical field of mobile platforms, and in particular, to a control method and control apparatus for a mobile platform, a mobile platform, and a storage medium.

### BACKGROUND

With the wide application of mobile platforms such as ground platforms and flight vehicles, more intelligent and efficient autonomous navigation becomes indispensable. Taking a vehicle as an example for the ground platform, self-driving, for example, on urban roads faces high technical difficulty. Existing aided driving schemes are only suitable for low-speed driving on urban roads. Due to the intricate network of urban roads and serious interference to GPS signals, positioning is inaccurate, and missing of traffic intersections or navigation to a non-target road occurs easily. Hence, the accuracy of autonomous navigation needs to be improved.

### SUMMARY

In view of the above, the present disclosure provides a control method and control apparatus for a mobile platform, and a storage medium to improve the autonomous navigation capacity of the mobile platform.

According to a first aspect of the present disclosure, a control method for a mobile platform is provided. The method comprises:
acquiring a target path along which the mobile platform moves;
acquiring target information including high-definition map information and historical motion information, which are associated with the target path; and
generating, based on the target information, a control instruction for controlling the mobile platform to move along the target path.

According to a second aspect of the present disclosure, a control method for a mobile platform is provided. The method comprises:
acquiring a target position;
determining, based on the target position, a target path along which the mobile platform moves;
acquiring real-time sensing information associated with the mobile platform and high-definition map information associated with the target path;
matching the real-time sensing information with the high-definition map information to determine positioning information of the mobile platform;
acquiring historical motion information associated with the target path; and
generating, based on the positioning information and the historical motion information, a control instruction for controlling the mobile platform to move along the target path.

According to a third aspect of the present disclosure, a control apparatus for a mobile platform is provided. The apparatus comprises a processor and a memory for storing processor-executable program instructions, where the processor, when calling the executable program instructions, performs the control method according to any embodiment in the specification.

According to a fourth aspect of the present disclosure, a mobile platform is provided. The mobile platform comprises a body, a power assembly, and a control apparatus for the mobile platform. The control apparatus includes a processor and a memory for storing processor-executable program instructions, where the processor, when calling the executable program instructions, performs the control method according to any embodiment in the specification.

According to a fifth aspect of the present disclosure, a computer-readable storage medium storing a computer program is provided, where the computer program, when executed, implements the control method according to any embodiment in the specification.

By applying the schemes provided by the present disclosure, a target path along which a mobile platform moves and target information which is associated with the target path and includes high-definition map information and historical motion information can be acquired, and a control instruction for controlling the mobile platform to move along the target path may be generated flexibly based on the target information, such that the mobile platform may perform autonomous navigation along the target path more safely, rationally, and accurately.

It should be noted that the above general description and the following detailed description are merely illustrative and explanatory, and are not intended to limit the present disclosure.

### BRIEF DESCRIPTION OF THE DRAWINGS

To better clarify the technical solutions in the embodiments of the present disclosure, accompanying drawings used for describing the embodiments are briefly introduced below. Obviously, the accompanying drawings described below merely illustrate some embodiments of the present disclosure. Those ordinarily skilled in the art may obtain other accompanying drawings according to the following ones without creative efforts.
FIG. 1 is a schematic diagram of an application scenario according to one embodiment of the present disclosure.
FIG. 2 is a flowchart of a control method for a mobile platform according to one embodiment of the present disclosure.
FIG. 3 is a flowchart of generating a control instruction based on target information according to one embodiment of the present disclosure.
FIG. 4 is a flowchart of determining positioning information of a mobile platform according to one embodiment of the present disclosure.
FIG. 5 is a schematic diagram of positioning based on information matching according to one embodiment of the present disclosure.
FIG. 6 is a schematic diagram of indicating information on an interactive control according to one embodiment of the present disclosure.
FIG. 7 is a schematic diagram of indicating information on an interactive control according to another embodiment of the present disclosure.
FIG. 8 is a schematic diagram of indicating information on an interactive control according to yet another embodiment of the present disclosure.
FIG. 9 is a schematic diagram of indicating information on an interactive control according to still another embodiment of the present disclosure.
FIG. 10 is a schematic diagram of generating differentiated identifiers according to one embodiment of the present disclosure.
FIG. 11 is a schematic structural diagram of a control apparatus for a mobile platform according to one embodiment of the present disclosure.
FIG. 12 is a structural block diagram of a mobile platform according to one embodiment of the present disclosure.

### DETAILED DESCRIPTION OF THE EMBODIMENTS

The technical solutions in the embodiments of the present disclosure are described in conjunction with accompanying drawings. Obviously, the embodiments described are merely some, rather than all, of the embodiments of the present disclosure. All other embodiments obtained by those ordinarily skilled in the art based on the embodiments of the present disclosure without creative efforts should also fall within the protection scope of the present disclosure.

Mobile platforms such as ground platforms and flight vehicles have been widely used in the field, and more intelligent and efficient autonomous navigation becomes indispensable. Taking a vehicle as an example for the ground platform, self-driving, for example, on urban roads faces high technical difficulty. Existing aided driving schemes are only suitable for low-speed driving on urban roads. However, owing to the complicated urban roads network and serious interference to GPS signals, positioning may become inaccurate, and missing of traffic intersections or navigation to a non-target road readily occurs. It is necessary to improve the accuracy of autonomous navigation.

In related art, a high-definition map is adopted to assist a mobile platform in navigation. The high-definition map has higher precision. However, to construct the high-definition map, a dedicated acquisition device is needed to acquire data and repeated drive on a same road under a smooth traffic condition is needed to acquire sufficient data. Then, a large quantity of background data processing is conducted to construct the high-definition map. At present, the coverage of the high-definition map is limited, and all-region and multi-urban area coverage is not available yet. For example, the high-definition map only covers main roads of a minority of first-tier cities and does not cover some other urban roads. In addition, the high-definition map cannot quickly sense many changeable traffic scenes such as road construction and road diversion owning to its low update frequency.

In other related art, route memory is also adopted to assist a mobile platform in navigation. The route memory records a route that is used every day by users, such as a fixed route from home to company. While traveling along the route, the mobile platform can not only record the condition of various streets and roads, but also record decision preferences and global path planning information. Navigation is assisted according to information recorded by route memory. While traveling along a fixed route, the mobile platform may pass through various types of roads such as community alleys, urban streets, urban avenues, fast roads, highways and internal roads. Some of these roads, such as urban avenues, fast roads, highways, may be covered with a high-definition map, while users have to manually drive the mobile platform on other roads. The route memory may cover the above various roads, but positioning on the roads based on information recorded by route memory is not accurate enough.

In view of this, the embodiments of the present disclosure provide a control method for a mobile platform. A target path along which the mobile platform moves and target information which is associated with the target path and includes high-definition map information and historical motion information may be acquired, and a control instruction used for controlling the mobile platform to move along the target path may be flexibly generated based on the target information, such that the mobile platform may perform autonomous navigation along the target path more safely, rationally, and accurately.

In some scenarios, the mobile platform control method in the embodiment of the present disclosure can be implemented by the mobile platform, for example, by a control device provided within the mobile platform, which may be a processor or a chip. In some scenarios, the mobile platform control method in the embodiment of the present disclosure can also be executed by a control device connected to the mobile platform, which can be a cloud server or various mobile terminals (for example, a mobile phone). The mobile platform can send the acquired environmental information to the control device, the control device determines the target passable passage and generates a control instruction for controlling the movement of the mobile platform, and then returns the control instruction to the mobile platform. In some scenarios, the mobile platform control method in the embodiment of the present disclosure can also be implemented such that part of the steps are performed by the mobile platform and part by the control device connected to the mobile platform. The specific configuration can be flexibly set based on actual needs, and the embodiments of the present disclosure do not apply any limitation.

In the embodiments of the present disclosure, the mobile platform includes a power unit for driving the mobile platform to move. The mobile platform in the embodiment of the present disclosure may be a vehicle, aircraft, ship, intelligent robot, or other movable device. The mobile platform may be a manned mobile platform or an unmanned mobile platform. Optionally, the mobile platform includes a payload for performing operations, which may be another mobile platform, an imaging device, a mechanical arm, a hoisting system, a spraying system, etc. The embodiments of the present disclosure do not specifically limit the type of payload.

In some embodiments, the vehicle may include automatic driving vehicle, manually driven vehicle, or human-machine shared driving vehicle. Optionally, the vehicle can be applied to one or more scenarios such as passenger cars, logistics vehicles, and sanitation vehicles. For example, an automatic driving vehicle may include a sensing system, a control system, and a mechanical system. The sensing system is configured to measure state information of the automatic driving vehicle (i.e., sensing data of the self-driving vehicle), and the sensing data may indicate position information and/or state information of the automatic driving vehicle. The sensing system, for example, may include at least one of a visual sensor, a lidar, a millimeter-wave radar, an inertial measurement unit, a global navigation satellite system, a gyroscope, an ultrasonic sensor, an electronic compass, a barometer, and other sensors. The control system is configured to determine how to control the automatic driving vehicle to travel according to the sensed data. The control system, for example, may include at least one of a computing platform such as a vehicle-mounted supercomputing platform, or a central processing unit, a distributed processing unit, or other devices with the processing function. The control system may further include a communication link for transmitting various data on the vehicle. The control system may output one or more control instructions to the mechanical system according to a decision made. In response to the one or more control instructions from the control system, the mechanical system controls the automatic driving vehicle to execute the above decision. The mechanical system, for example, may include at least one of a mechanical body engine/motor or a wire control system for control. It is understandable that the names of the components of the automatic driving vehicle are merely for identification and should not be construed as limitations of the embodiments of the present disclosure.

In some embodiments, the aircraft may include rotorcraft, such as quadrotor, hexarotor, or octorotor aircraft, or may be a fixed-wing aircraft, or a combination of rotorcraft and fixed-wing aircraft. Optionally, the aircraft may include unmanned aircraft. The aircraft can include but are not limited to manned aircraft, logistics aircraft, aerial photography aircraft, and agricultural plant protection aircraft.

Any description in the present application referring to a vehicle may apply to any movable object, such as any carrier. In addition, the methods and devices disclosed in the present application for ground movement scenarios can also be applied to other types of movement scenarios, such as movement in the air, on or under water, or in space.

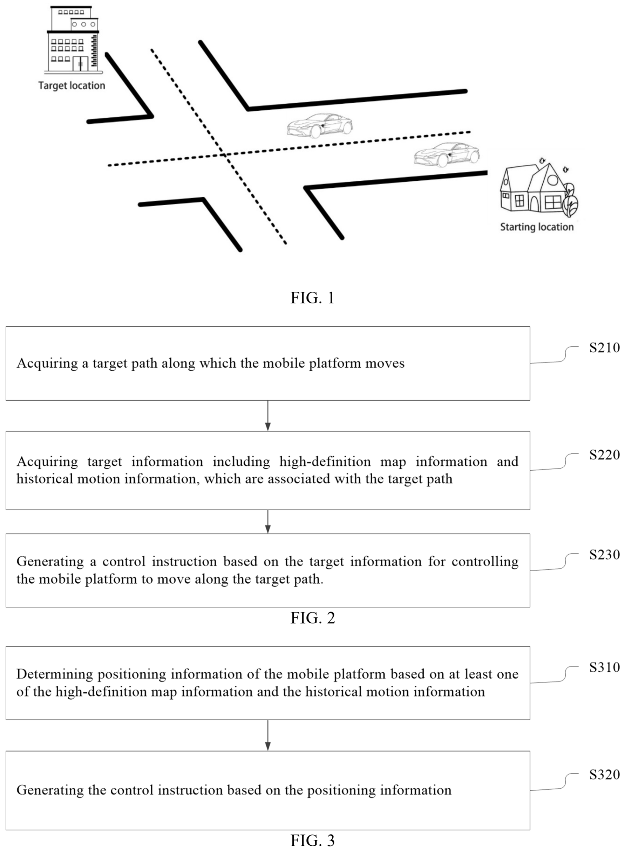

As shown in FIG. 1 which is a schematic diagram of an application scenario according to the present disclosure, the mobile platform may autonomously perform navigation from a starting location to a target location. Illustratively, the mobile platform is a vehicle. The vehicle may autonomously perform navigation from the residence to the company of a user. The vehicle may acquire a target path along which the vehicle moves and target information which is associated with the target path and includes high-definition map information and historical motion information, and flexibly generate, based on the target information, a control instruction for controlling the vehicle to move along the target path, such that the vehicle may perform autonomous navigation along the target path more safely, rationally, and accurately.

Specifically, as shown in FIG. 2, the control method for a mobile platform may include the following steps.

S210, a target path along which the mobile platform moves is acquired.

In step S210, according to different target information acquirable from the target path, the target path may be segmented. For example, the target path may include a first path, a second path, and a third path. Optionally, the mobile platform may acquire a target position where the mobile platform is expected to arrive, and automatically determine, based on a current position of the mobile platform, a target path from the current position to the target position. Optionally, the target path along which the mobile platform moves may be determined based on user's input information. Or, a road-level navigation path from the current position of the mobile platform to the target position and road condition information of the road-level navigation path may be acquired based on a navigation map, so as to determine the target path. Because of the low precision of the navigation map, although the road-level navigation path may be determined based on the navigation map, a lane-level or channel-level navigation path cannot be accurately generated based on the navigation map. That is, a target available lane for the mobile platform cannot be accurately selected from a road with a plurality of available lanes, so the mobile platform cannot be controlled to move autonomously along the target available lane. It is easily understandable that any method for acquiring the target path along which the mobile platform moves is applicable to the schemes in the embodiments of the present disclosure, and the present disclosure has no limitation in this aspect.

S220, target information is acquired, where the target information includes high-definition map information and historical motion information, which are associated with the target path.

In step S220, in a first aspect, the high-definition map information and the historical motion information which are associated with the target path are mutually complementary. For example, the high-definition map information may make up for the deficiency in road side information of the target path acquired by the historical motion information, and the historical motion information may make up for the deficiency in coverage and low update frequency of the high-definition map on the target path, thereby improving the autonomous navigation capacity of the mobile platform on the target path.

In a second aspect, the high-definition map information and the historical motion information which are associated with the target path may be effectively verified by each other to check the accuracy of the information. For example, if it is determined, based on the high-definition map information, that a landmark B exists at a position A on the target path and it is also determined, based on the historical motion information, that the landmark B exists at the position A, it indicates that the positioning accuracy of the landmark B based on the high-definition map information and the historical motion information is higher, and the high-definition map information and the historical motion information may be used as reliable references for subsequent navigation of the mobile platform. However, if it is determined, based on the historical motion information, that the landmark exists at a position C and a distance between the position C and the position A exceeds a preset error range, it indicates that the high-definition map information and the historical motion information have low confidence level in positioning on the landmark B, repositioning is needed, and the high-definition map information and the historical motion information will not be used for navigation of the mobile platform until related errors are corrected.

In a third aspect, the high-definition map information and the historical motion information may cooperate with each other to further improve user experience in a complex scenario. The high-definition map information may provide accurate global prior information. For example, in a case where it is determined, based on the high-definition map information, that the mobile platform is about to reach to a crossroad, a historical motion information acquisition module may be enabled, such that background computing resources may be saved. Moreover, at the crossroad, a local decision may be made with reference to experience information in the historical motion information to guarantee high autonomous movement accuracy of the mobile platform and better conform or adapt to personal routine driving habits of users, thus being more user-friendly and improving user experience in the complex scenario.

In some embodiments, the mobile platform may respectively and separately use the high-definition map information and the historical motion information, which are associated with the target path, for motion control. In some other embodiments, the high-definition map information associated with the target path may be fused with the historical motion information to generate fused electronic map information. The mobile platform may perform motion control based on the fused electronic map information. The above fusion may be performed by at least one of GPS coordinate positioning, feature matching, etc. In some embodiments, the high-definition map information and the historical motion information may be fused according to different confidence levels or weights. Further, the weights of the fused high-definition map information and the historical motion information may be dynamically adjusted. The influence factor on dynamic changes of the weights, for example, includes one or more of coverage, information density, update frequency, road condition, etc. For example, in a case where the mobile platform moves from an urban road to a road under construction, the confidence level or weight of the historical motion information may be increased to prevent the situation where the movement safety of the mobile platform is affected because road change information cannot be acquired in time due to the low update frequency of the high-definition map information.

In some embodiments, the mobile platform may automatically determine whether the target information is acquirable. The target information may be determined by acquiring target information which is associated with the target path and pre-stored in a storage device of the mobile platform, or may be received and/or updated from a third-party device by means of a receiving device. Illustratively, the third-party device includes at least one of external devices such as a cloud, a control terminal or other mobile platforms. It is easily understandable that any method for acquiring the target information is applicable to the schemes in the embodiments of the present disclosure, and the embodiments of the present disclosure have no limitation in this aspect.

In S230, a control instruction is generated based on the target information, where the control instruction is used for controlling the mobile platform to move along the target path.

In step S230, the mobile platform automatically generates the control instruction based on the target information and is controlled to move along the target path to complete a specific task without being sensed by users. In some embodiments, users, after setting a target position, may manually control the mobile platform on the target path according to a road-level navigation path. When the target information associated with the target path, including the high-definition map information and the historical motion information, is acquired, users may be prompted, by one or more of a pop-up window, a speech and a touch, that the mobile platform can be switched to an automatic control mode currently. For example, the users may be prompted by a speech saying "the mobile platform can be controlled automatically, whether it is needed?". In some embodiments, the control mode of the mobile platform may be switched automatically or users may be prompted to switch the control mode of the mobile platform on different sections of the target path according to different confidence levels of the target information associated with the target path.

In the embodiments of the present disclosure, the target path along which the mobile platform moves and the target information which is associated with the target path and includes the high-definition map information and the historical motion information may be acquired, and the control instruction used for controlling the mobile platform to move along the target path may be generated flexibly based on the target information, such that the mobile platform may perform autonomous navigation along the target path more safely, rationally, and accurately.

In some embodiments, the target path along which the mobile platform moves may be acquired. The target path includes a first path, a second path, and a third path. If it is determined that the high-definition map information associated with the first path is acquired, a control instruction is generated based on the high-definition map information in the first path. If it is determined that the historical motion information associated with the second path is acquired, a control instruction is generated based on the historical motion information in the second path. If it is determined that the high-definition map information and the historical motion information which are associated with the third path are acquired, a control instruction is generated based on the high-definition map information and the historical motion information in the third path. Based on the control instruction, the mobile platform is controlled to select a target road to move along the target path. There may be a plurality of available roads on the target path, from which the target road is determined.

In some embodiments, the control instruction may be generated in various ways. For example, the control instruction may be generated based on one or a combination of the high-definition map information, the historical motion information, and real-time sensing information, which are all applicable in the embodiments of the present disclosure. The embodiments of the present disclosure have no limitation in this aspect.

In some embodiments, the target information further includes the real-time sensing information associated with the mobile platform. Optionally, the control instruction of the mobile platform may be generated based on the real-time sensing information, the high-definition map information, and the historical motion information. The real-time sensing information may include current environmental information of the mobile platform and/or state information of the mobile platform. For example, the environmental information may include one or more types of static environmental information sensed around the mobile platform, such as high-rise buildings, dead ends, traffic lights, entrances and exits, parking space, and charging stations, and may also include one or more types of dynamic environmental information sensed around the mobile platform such as pedestrians and other mobile platforms. For example, the state information of the mobile platform may indicate one or more of the position, angle, speed, acceleration and angular speed of the mobile platform. The target information may be determined based on a sensing system. The sensing system may include at least one of such sensors as a visual sensor (for example, including a plurality of monocular or binocular vision devices), a lidar, a millimeter-wave radar, an inertial measurement unit, a global navigation satellite system, a gyroscope, an ultrasonic sensor, an electronic compass, and a barometer. For example, the global navigation satellite system may be a global positioning system or a Beidou navigation satellite system.

It is worth noting that real-time sensing may be interpreted as online sensing. The real-time sensing information may be sensing information determined by the mobile platform at the current time or sensing information determined after the mobile platform moves for a period of time. For example, the real-time sensing information is determined according to the sum of sensing information in a period of time. Optionally, integration of sensing information in a period of time may be a sum of sensing information in the period of time. For example, the sensing information in the whole period of time is superimposed and fused to guarantee richer and available sensing information. Optionally, fragments in selected time periods may be obtained according to the sum of the sensing information in a period of time. For example, the time fragment at the beginning and the time fragment at the end may be selectively deleted, and only the intermediate time fragment is reserved, such that acquired instable sensing information caused by starting or stopping of the mobile platform may be deleted intelligently, and sensing information acquired in the intermediate time fragment during which the mobile platform travels stably is reserved, thus guaranteeing the accuracy of the sensing information. Optionally, the real-time sensing information is acquired and determined by a sensor equipped on the mobile platform, or may be sensed and determined online by a third-party device and sent to the mobile platform.

In the embodiments of the present disclosure, by superimposing the real-time sensing information of the mobile platform, the target information is richer and more accurate based on the high-definition map information and the historical motion information, and the mobile platform may plan a path more safely and reliably according to the target information.

As shown in FIG. 3, in some embodiments, generating the control instruction based on the target information may include the following steps:
S310: determining positioning information of the mobile platform based on at least one of the high-definition map information and the historical motion information; and
S320: generating the control instruction based on the positioning information.

Optionally, based on the acquired positioning information, the control instruction may be generated in conjunction with at least one of the historical motion information and the real-time sensing information associated with the mobile platform. Optionally, the mobile platform includes a positioning module based on the high-definition map information and/or a positioning module based on the historical motion information. Optionally, the positioning information of the mobile platform may be determined as long as any one of the positioning modules succeeds in positioning. If the positioning module based on the high-definition map information and the positioning module based on the historical motion information both succeed in positioning, a corresponding positioning strategy may be set to fuse the two types of information. In some embodiments, different priorities may be set for the positioning modules. For example, if the priority of the positioning module based on the high-definition map information is set to be higher, the positioning information of the mobile platform is determined preferably by the positioning module based on the high-definition map information, and positioning information determined by the positioning module based on the historical motion information may be used for assistance or calibration. In some other embodiments, different confidence levels or weights may be set for the two positioning modules. For example, the positioning information determined by the positioning module based on the high-definition map information and the positioning information determined by the positioning module based on the historical motion information are fused according to different confidence levels or weights to finally determine the positioning information of the mobile platform. Optionally, the confidence levels or weights may be adjusted dynamically. The influence factor on dynamic adjustment of the weights, for example, includes one or more of coverage, information density, update frequency, road condition, etc. Illustratively, the weights may be dynamically adjusted according to changes of the target path. For example, in a case where the mobile platform moves from an urban road to a road under construction, the confidence level or weight of the positioning module based on the historical motion information may be increased to prevent the situation where positioning is inaccurate because road change information cannot be acquired in time owning to the low update frequency of the high-definition map information. Optionally, users may adjust the fusion method for the high-definition map information and the historical motion information by means of an interactive control.

In actual application, environmental information of the target path is complex and changeable, and information acquired by the mobile platform will be different or change in real time. Common users probably cannot comprehend the difference between navigation independently based on high-definition map information and navigation independently based on historical motion information, and have no idea which one to choose. In the embodiments of the present disclosure, based on the corresponding positioning strategy, the positioning information of the mobile platform may be determined automatically based on the target information covered on the target path, such as the high-definition map information and the historical motion information, without being sensed by users, and the control instruction is generated at least based on the positioning information to control the mobile platform to move along the target path, such that the mobile platform may perform autonomous navigation more accurately, conveniently, and rationally. In the embodiments of the present disclosure, accurate positioning of the mobile platform may be determined in a complex and changeable scenario to generate a safer and more rational control instruction, thereby improving the autonomous navigation accuracy of the mobile platform, better conforming to user habits, and improving the user experience. Further, automatic driving problems in urban areas such as limited coverage of a high-definition map and low accuracy of historical motion information can be effectively solved, and more accurate autonomous navigation can be performed automatically based on acquired information without being sensed by users.

In some embodiments, overall planning, control, decision, and other information may be recorded every time the mobile platform moves on the target path, or information based on a plurality of historical records may be optimized and analyzed to be stored as historical motion information, or stored historical motion information may be updated. In this way, the historical motion information may provide a more rational reference for subsequent movement of the mobile platform on the target path. For example, if the mobile platform fails to change the lane due to automatic control based on a previous travel trajectory and is manually driven, the mobile platform will change the lane in advance next time to turn right. For another example, in a case of congestion ahead due to construction, the mobile platform will also take care to travel along another available lane next time.

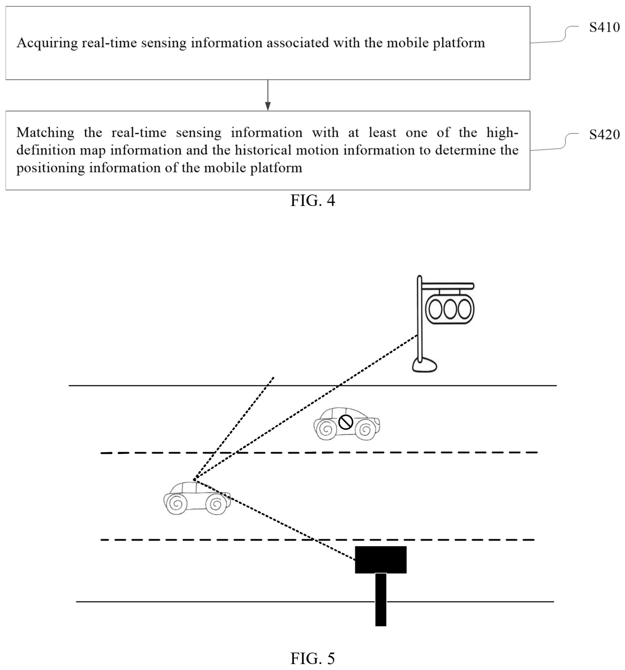

As shown in FIG. 4, in some embodiments, determining the positioning information of the mobile platform may include the following steps:
S410: acquiring real-time sensing information associated with the mobile platform; and
S420: matching the real-time sensing information with at least one of the high-definition map information and the historical motion information to determine the positioning information of the mobile platform.

Optionally, the real-time sensing information of the mobile platform includes current environmental information of the mobile platform and/or state information of the mobile platform. Optionally, the target path includes a plurality of road sections. On the first path of the target path, the real-time sensing information of the mobile platform may be matched with the high-definition map information; on the second path of the target path, the real-time sensing information of the mobile platform may be matched with the historical motion information; and on the third path of the target path, the real-time sensing information of the mobile platform may be matched with information obtained by fusing the high-definition map information and the historical motion information. For example, in a case where the mobile platform is a vehicle, the real-time sensing information may be matched with at least one of the high-definition map information and the historical motion information to determine lane-level positioning information of the vehicle on the target path. For example, it is positioned that the vehicle is on a first lane of the first path.

As shown in FIG. 5, in some embodiments, matching includes more precise local search under the condition that general position and orientation information of the mobile platform is known. Optionally, an initial pose may be determined by means of a satellite positioning system or an inertial navigation system equipped on the mobile platform to determine a local search range of the high-definition map information and/or the historical motion information, and then the real-time sensing information and the high-definition map information and/or the historical motion information are transformed into a same coordinate system for matching. If the matching succeeds, more accurate positioning information of the mobile platform may be determined. Optionally, the high-definition map information and/or the historical motion information may include semantic information and/or statistical information. Illustratively, the semantic information may include semantic feature information of more or more road environments such as lane lines, channel lines, stop lines, diversion lines, street lights, and wire poles. The statistical information may include information of statistical significance such as average reflectivity, variance, and average height. Illustratively, the mobile platform may detect environmental features of detection objects, including lane lines and poles, according to the real-time sensing information, and extract corresponding elements from corresponding position ranges of the high-definition map information and/or the historical motion information. On one hand, in the matching process, the mobile platform may compare or match road elements such as lane lines and guardrails detected based on the real-time sensing information with road features provided by the high-definition map information and/or the historical motion information to revise horizontal positioning of the mobile platform. On the other hand, in the matching process, the mobile platform may compare or match road elements such as advertising boards, traffic lights, and traffic signs detected based on the real-time sensing information with the road features provided by the high-definition map information and/or the historical motion information to revise vertical positioning of the mobile platform.

Traditional positioning methods based on the satellite positioning system or the inertia navigation system often lead to large errors, causing a positioning result to deviate from the actual position of the mobile platform. By introducing the real-time sensing information and matching the real-time sensing information with at least one of the high-definition map information and the historical motion information, positioning errors may be effectively reduced, and the positioning information of the mobile platform may be rectified to the correct lane or channel, thus improving the positioning accuracy. Particularly, the high-definition map information and the historical motion information may be fused, and the target information obtained by fusing the high-definition map information and the historical motion information is matched with the real-time sensing information to further improve the positioning accuracy and reliability, such that an accurate and reliable positioning result may be obtained to serve as an input for sensing, planning and navigation control of the mobile platform to allow the mobile platform to better complete an autonomous task.

In some embodiments, the real-time sensing information is determined based on traveling of the mobile platform on the target path for a preset distance and/or preset time. Optionally, the historical motion information may include map information associated with the target path. The map information, for example, may include an environmental feature map around the mobile platform. Optionally, the environmental feature map may be determined by extracting features from image data or point cloud data. This embodiment has no limitation to the method for extracting features, and a neural network or other methods may be adopted. For example, ORB features may be extracted and matched, where the ORB features may be extracted in real time, and optical flow tracking and descriptor matching may be performed on the extracted features. Deep feature information of pixels in an image may be determined in conjunction with point cloud data acquired by a lidar, and features, etc. of a point cloud may be extracted from the point cloud data. These features may be stored as description information to serve as a part of map data and may be matched with environmental information acquired by the mobile platform in real time when navigation is performed later based on the map data.

In some actual scenario such as on a highway where there is a single type of environmental information such as guardrails or trees around the mobile platform, or in a scenario where features in an established environmental feature map are sparse because historical motion information recorded in the historical traveling process is refined key information and other information is simplified, or in a scenario where there is only a small amount of information of some positions in a traffic scene because data of these positions in pre-recorded historical information is sparse, leading to a few of available feature point information when the historical motion information is used later, or in a scenario where the environmental state when the historical motion information is recorded is significantly different from the environmental state when the historical motion information is used currently, for example, the historical motion information is recorded in the daytime with a good light condition while the historical motion information is used at night currently, the mobile platform may travel for a preset distance to determine the real-time sensing information. The preset distance may be a preset distance value such as 10 m, 20 m, 50 m, 75 m, or 100 m. The preset distance may also be a preset distance range. For example, the preset distance may be greater than 10 m, greater than 20 m and less than 100 m, or greater than 100 m. Optionally, the real-time sensing information determined based on traveling of the mobile platform on the target path for the preset distance is matched with the environmental feature map in the historical motion information to ensure that there is sufficient real-time sensing information to be matched with the historical motion information, thus improving the success rate or accuracy of positioning through matching.

In some embodiments, the historical motion information may preferably record some information that cannot be easily acquired from the high-definition map information to complement existing high-definition map information. Illustratively, the high-definition map information may include topological relations between channels, road markings, road facilities, road attributes, traffic lights, traffic signs, landmarks, etc. The historical motion information may record, for example, some personalized decision information or operation information of users, information related to key nodes on the target path, obstacle information, information in special environmental states, temporary traffic control information, travelling state information of the mobile platform, etc. In this way, occupation of a large memory space is avoided, consumption of computing resources is reduced, and key information may be recorded to make up for information deficiency of the high-definition map.

In some embodiments, the historical motion information includes one or more of the following information: environmental information, historical travel trajectory information, and decision information associated with users. Optionally, the environmental information may include information of surrounding environments where the mobile platform passes in the historical traveling process along the target path, such as one or more of road models, road facilities, traffic guidance signs, environmental obstacles, and abnormal road occupation. Optionally, the historical travel trajectory information may include historical travel trajectory information of the mobile platform on the target path, such as one or more of navigation steering information, path length information, vehicle speed information, lane information, and intersection position information, etc., of the mobile platform on the target path. Optionally, the decision information associated with users may include decision habit information determined based on the historical motion information of the mobile platform on the target path, such as one or more of speed habit, lane occupation habit (for example, habitual occupation of the left/right lane, the turn lane occupation, etc.), flashing and whistling habit, following distance habit, and overtaking distance habit. Optionally, the historical motion information may be generated based on surrounding environments and travel trajectories acquired when the mobile platform previously travels on the target path, and may include one or more types of information associated with the target path, such as steering navigation information, abnormal obstacle information, or driving behavioral habit information.

In some embodiments, if the mobile platform never travels through the target path previously, the mobile platform may move autonomously along the target path based on the high-definition map information or users may manually control the mobile platform to move along the target path. Then, the mobile platform may record historical motion information in the traveling process along the target path, extract key information from the historical motion information, and store the key information. For example, the mobile platform may record, by using a visual odometer, the following key information in the traveling process: 25m away from the current mobile platform, to be specific, on the left lane or channel, turn left/turn right/travel straight; turn around 50m ahead the current mobile platform; and other decision-related key information. Optionally, the key information recorded may be fused with or checked by an airborne navigation map to obtain a navigation assistance map. The navigation assistance map may be a simplified version of an advanced driving assistance system (ADAS) map. In some embodiments, preference-related key information of the mobile platform on the target path may be recorded in the traveling process, e.g., starting about 2s after the green light is turned on, stopping 10m ahead the zebra crossing, habitually braking or detouring in case of an obstacle, habitually driving in the middle lane on the highway, and driving at a speed of 25km/h on urban roads. The recorded information may be stored as historical motion information, and the stored historical motion information may be updated. Such key information may be not associated with the target path and thus may be generally applicable to other road sections, that is, users may refer to such key information on all road sections. In this way, a decision that is more in line with user's habits may be made on any road sections, making navigation more intelligent and rational and improving the automatic driving experience.

In this embodiment, the control instruction may be generated based on the target information, which includes the high-definition map information and the historical motion information. Because the historical motion information may include at least one of the environmental information, the historical travel trajectory information, and the decision information associated with users, the mobile platform may automatically generate the control instruction for path planning and speed control without user participation, to more rationally and easily complete a specific task. Further, an interface for selecting information may be opened to users while the high-definition map information and the historical motion information are acquired, and the users may select, via the interface, specific information from the high-definition map information and/or the historical motion information as influence factors of the control instruction for reference. Different degrees of influences may be set for the high-definition map information and the historical motion information to allow for more flexible navigation control of the mobile platform.

In some embodiments, the mobile platform is equipped with a sensor, and the target information is determined based on the sensor; and/or, the mobile platform is equipped with a communication device, and the target information is acquired from a third-party device based on the communication device. That is, any one of the high-definition map information, the historical motion information, and the real-time sensing information may be determined by the sensor equipped on the mobile platform, or may be acquired or determined from a third-party device other than the mobile platform.

In some embodiments, the third-party device includes an aerial mobile terminal and/or a ground mobile terminal. Illustratively, the aerial mobile terminal may be an aerial carrier such as a flight vehicle or a carrier rocket. The ground mobile terminal may be a ground carrier such as a vehicle or a ship. In one implementation scenario, the mobile platform is a ground vehicle and acquire any one of the high-definition map information, the historical motion information, and the real-time sensing information from a flight vehicle in the air by means of the communication device, such that the computing resources and storage space of the mobile platform may be effectively saved while high accuracy is guaranteed. Optionally, any of the above information may be updated online or offline.

Optionally, the sensor may include, but is not limited to, an image sensor, a microwave radar, a lidar, an ultrasonic sensor, etc. Any one of the high-definition map information, the historical motion information, and the real-time sensing information may be determined based on images acquired by the image sensor, and/or echoes acquired by the microwave radar, and/or point clouds acquired by the lidar, and/or ultrasonic data acquired by the ultrasonic sensor. For example, the image sensor may acquire images around the vehicle when the mobile platform travels along the target path, and any one of the high-definition map information, the historical motion information, and the real-time sensing information may be determined based on at least one image acquired by the image sensor. Traffic guide information, such as one or more of road topologies, traffic signs, traffic permit information, and environmental sights of the target path may be constructed based on any one of the high-definition map information, the historical motion information, and the real-time sensing information. Optionally, the communication device may include, for example, a vehicle-to-everything (V2X) communication device, an Internet of Vehicles communication device, a wireless radio-frequency communication device, a Bluetooth communication device, etc. Any one of the high-definition map information, the historical motion information, and the real-time sensing information may be description information, which is associated with the target path and received from the third-party device by means of the communication device. For example, the description information may be received through near field communication, peer-to-peer (P2P), etc. Optionally, the third-party device may be at least one of external devices such as other mobile platforms, mobile platform service providers, clouds, and control terminals.

In some embodiments, the high-definition map information includes offline high-definition map information or online high-definition map information. The offline high-definition map information may be global map information with more data, thus guaranteeing the comprehensiveness and richness of information. Illustratively, based on the online high-definition map information, more effective dynamic map information may be released in real time from a cloud to the mobile platform such as a vehicle, to effectively solve the problem of an increase in the quantity of data and provide strong support for various demands in application scenarios such as ADAS, embedded navigation, and automatic driving.

In some embodiments, in a case where the high-definition map information and/or the historical motion information is acquired, the mobile platform may be controlled to enter an automatic control mode. After the target position is acquired, users may be first prompted to manually control or semi-automatically control the mobile platform on the target path according to a road-level navigation path. In a case where the high-definition map information and/or the historical motion information is acquired, the mobile platform may be automatically controlled to enter an automatic control mode, or users may be reminded, by one or more prompt methods such as a pop-window, a speech and a touch, that the mobile platform may be currently switched to the automatic control mode. The users may switch the control mode of the mobile platform by means of a set operation component of a vehicle such as at least one of a driving state switching button, a lamp pole, a brake pedal, an accelerator, and a steering wheel.

In some embodiments, in a case where the target information is not acquired or the confidence level of the acquired target information is not in line with a preset condition, one or more of the following operations are performed: determining pose change information of the mobile platform, and generating the control instruction based on the pose change information; generating safety prompt information to give a prompt to users; and generating a control mode switching instruction to switch a control mode of the mobile platform. The case where the confidence level of the acquired target information is not in line with the preset condition may be that the confidence level is lower than a set confidence threshold. Optionally, the mobile platform may still generate the control instruction based on the pose change information to maintain safe automatic navigation within a period of time. The mobile platform may also send prompt information to users in time to remind the users to pay attention and prepare to take over and manually control the mobile platform. Certainly, if the mobile platform has been in the manual control state, no prompt will be provided. In a case where the mobile platform has a high degree of autonomous authorization, the mobile platform may automatically exit from the automatic driving mode or slow down/stop.

In the embodiments of the present disclosure, the mobile platform may autonomously, automatically and smoothly switch the control mode according to the acquired target information to complete a specific task more efficiently and rationally. If it is determined that the target information is not acquired or the confidence level of the acquired target information is not in line with the preset condition, it indicates that the reliability of the target information of the road section is low and the risk of automatic control or automatic driving based on the target information is high, so other schemes may be adopted flexibly to guarantee safe operation of the mobile platform.

In some embodiments, the mobile platform is equipped with a visual sensor, and the pose change information of the mobile platform is determined based on environmental information acquired by the visual sensor. In the traveling process of the mobile platform, environmental features may be acquired by at least two visual sensors to determine relative pose change information of the mobile platform in the traveling process. In some embodiments, generating the control instruction based on the pose change information includes: determining positioning information of the mobile platform at a second time based on positioning information of the mobile platform at a first time and pose change information of the mobile platform at the second time with respect to the first time; and generating the control instruction based on the positioning information of the mobile platform at the second time. Optionally, the positioning information of the mobile platform may be determined based on cumulative positioning of a visual odometer. In a case where the high-definition map information and the historical motion information are not available or in a case where absolute positioning is lost, the mobile platform may still determine the positioning information based on the pose change information to generate the control instruction. By adopting such as relative positioning method, the mobile platform may still maintain safe autonomous navigation within a period of time or a certain distance.

In some embodiments, a plurality of available lanes around the mobile platform may be recognized based on the environmental information acquired by the sensor equipped on the mobile platform. The control instruction is also used for determining at least one target available lane from the plurality of available lanes and controlling the mobile platform to move along the target available lane. Optionally, when the mobile platform is controlled to turn around or make a turn, a planned partial route may be not matched with a preset route, and in this case, the road structure of a crossroad may be predicted by real-time sensing of the mobile platform to better control the mobile platform to enter a correct available lane and/or turn around along a corresponding available lane.

In some embodiments, during movement of the mobile platform along the target path, one or more of the following information is indicated on an interactive control:
a visual representation for representing relative position relations and/or relative height relations between the mobile platform and other objects around;
an identifier which is generated based on the control instruction and represents a planned route of the mobile platform on the target path;
an identifier for representing a traffic condition of a lane where the mobile platform is located, where the identifier for representing the traffic condition of the lane where the mobile platform is located is different from identifiers for representing traffic conditions of other lanes on the target path; and
prompt information for representing and prompting a specific position of the target path, where the prompt information is generated before the mobile platform moves to the specific position.

Optionally, users may communicate with the interactive control of the mobile platform in different interaction forms, e.g., in one or more of voice commands, gesture control, virtual reality (VR), enhanced reality (AR), touch, etc. Illustratively, the interactive control may include one or more of a display screen, a windshield, a remote control, a mobile terminal, and other controls.

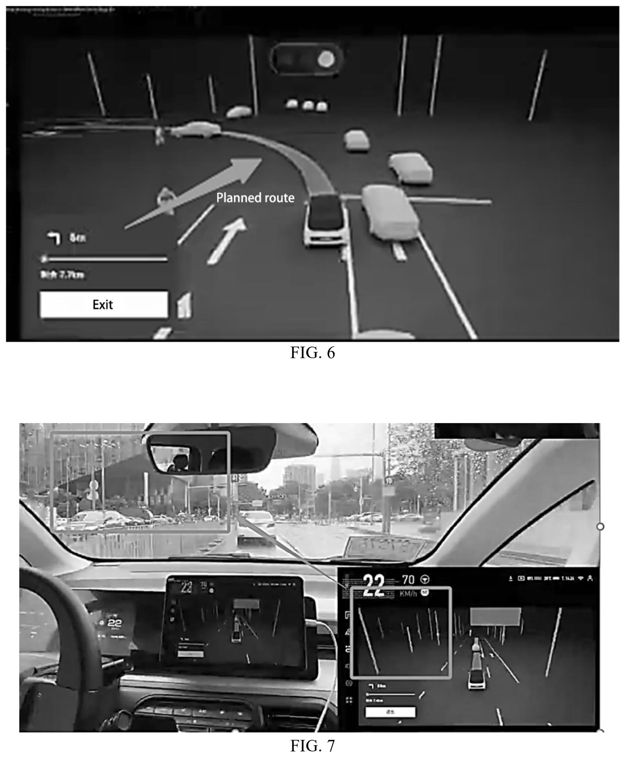

As shown in FIG. 6, in some embodiments, a visual representation for representing relative position relations between the mobile platform and other objects around may be displayed on the interactive control. For example, a visual representation for representing relative position relations between the mobile platform and other objects around such as mobile platforms, pedestrians, buildings and traffic facilities may be displayed to allow users to perceive surrounding environmental information of the mobile platform at the current position, e.g., whether there is a mobile obstacle around the mobile platform, whether there is a potential safety hazard, or whether the motion path is rational.

As shown in FIG. 6, in some embodiments, an identifier which is generated based on the control instruction and used for representing a planned route of the mobile platform on the target path may be indicated on the interactive control. Optionally, the identifier may be displayed in a front region in the velocity direction of the mobile platform. Optionally, a simulated three-dimensional space that maps the true relation between the mobile platform and the surrounding environment may be displayed on the interactive control, and a partial route planned by the mobile platform may be projected to the simulated three-dimensional space to indicate subsequent direction information of the motion path of the mobile platform, such that whether the planned partial route is matched with a planned global route along the target path may be determined, and users may be reminded to pay attention to objects in the vicinity of the partial route.

As shown in FIG. 7, in some embodiments, a visual representation for representing relative height relations between the mobile platform and other objects around may be displayed on the interactive control. Optionally, the relative height relations may be determined based on environmental information sensed in real time by the mobile platform and/or prestored map information. Optionally, the image may indicate the height of other objects in side regions of the target path. The other objects may be of columnar structures, such as one or more of height restriction barriers, wire poles, road lights, traffic sign poles, and poles for road traffic cameras. Relative height information may represent whether the height of the mobile platform is close to the height of other objects, and in a case where the height of the mobile platform is close to the height of other objects, a safety risk probably exists. For example, if the height of the mobile platform is extremely close to the height of a height restriction barrier, it indicates that the mobile platform, when passing through the height restriction barrier, possibly touches the height restriction barrier, or the passable height of the mobile platform will be restricted. For another example, if the height of the mobile platform is close to the height of wire poles, it indicates that the mobile platform, when passing in the vicinity the wire poles, possibly touches wires between the wire poles. In these cases, the mobile platform may generate corresponding safety prompt information that is indicated on an interactive interface, and the mobile platform may be automatically controlled to adjust the motion path to guarantee the traveling safety.

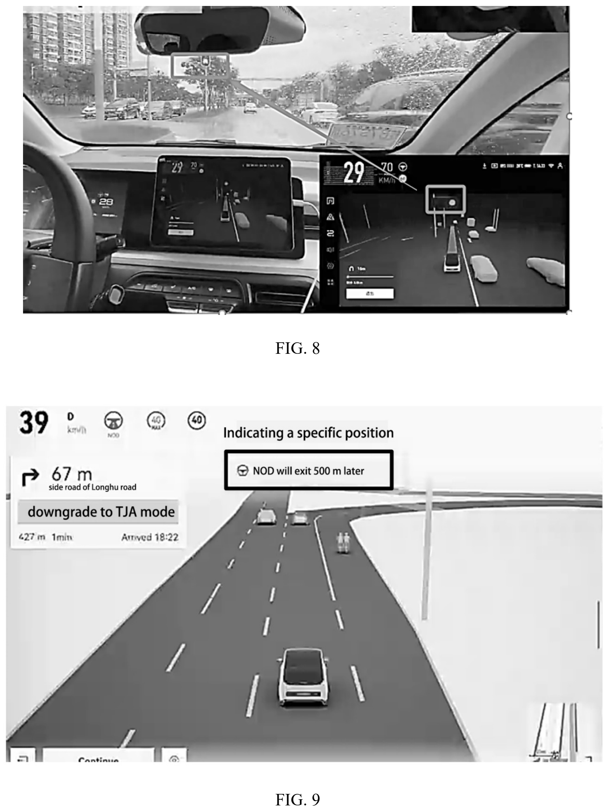

As shown in FIG. 8, in some embodiments, an identifier for representing the traffic condition of a lane where the mobile platform is located may be displayed on the interactive control, and the identifier for representing the traffic condition of the lane where the mobile platform is located is different from identifiers for representing traffic conditions of other lanes on the target path. Optionally, a state identifier for traffic lights may be displayed in an upper region in the velocity direction of the mobile platform. Illustratively, the identifier for representing the traffic condition includes an identifier for traffic lights. For example, only traffic light information of the lane, where the mobile platform is located, is displayed, and traffic light information of other lanes ahead the lane, where the mobile platform is located, is not displayed. Certainly, the traffic light information of the lane where the mobile platform is located may be highlighted, for example, by increasing the display brightness, and traffic light information of other lanes may be downplayed, for example, by decreasing the display brightness. By associating the identifier for representing the traffic condition with the lane where the mobile platform is located and differentiating the identifier for representing the traffic condition of the lane where the mobile platform is located from the identifiers for representing the traffic conditions of other lanes, the visual matching degree is improved, users may keep their attention to the trafficability of the current lane where the mobile platform is located, and the situation where the users mistakenly take the traffic condition of other lanes as the traffic condition of the current lane due to fatigue or distraction and directly control the mobile platform according to the traffic condition of other lanes, thus violating laws and regulations may be avoided to some extent.

As shown in FIG. 9, in some embodiments, prompt information for representing and indicating a specific position on the target path may be indicated on the interactive control. Optionally, users may be reminded of a specific position where they need to take over the mobile platform on a planned global road section and/or a planned partial road section of the mobile platform. Illustratively, a relative position relation between the specific position and the current position of the mobile platform may be indicated on the interactive control. For example, the specific position may be marked or highlighted on the interactive interface to remind users that they may need to take over the mobile platform. For example, users may be reminded that the mobile platform will reach the specific position after traveling a specific mileage or time by means of the interactive interface or a speech. Because the prompt information is generated before the mobile platform moves to the specific position, users may be reminded to make preparation for taking over the mobile platform before the mobile platform reaches the specific position, so as to guarantee the traveling safety.

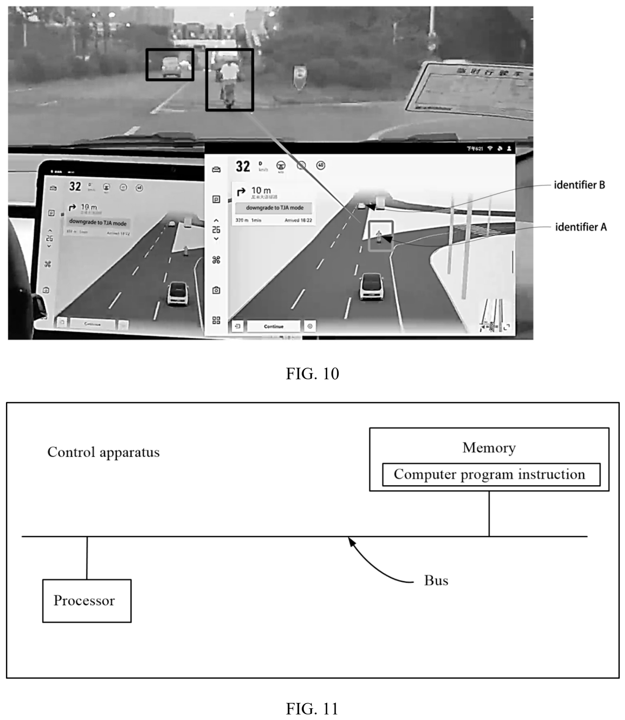

As shown in FIG. 10, in some embodiments, when the mobile platform moves along the target path, differentiated identifiers may be generated according to different degrees of constraint of objects around the mobile platform on the movement of the mobile platform on the target path. An identifier A in FIG. 10 and an identifier B in FIG. 10 are two differentiated identifiers. Illustratively, objects around the mobile platform may be vehicles, walls, poles, road signs, lights, pedestrians, or barrier gates of parking lots and may also be monitoring devices arranged in the traffic scene, wall markers, or markers in parking space. Optionally, if it is detected that a mobile object around the mobile platform satisfies a preset direction condition and/or a preset distance condition, the mobile object and other objects around the mobile platform will be displayed differentially on the interactive control, and a control instruction for adjusting the motion state of the mobile platform is generated. For example, if it is detected that a mobile object, such as a pedestrian or other mobile platforms, appears 50m ahead on a partial route planned by the mobile platform, the mobile object may be highlighted. For example, the mobile object may be emphatically marked or displayed brightly. Optionally, one or more mobile objects may be highlighted. Objects 100m ahead on the partial route planned by the mobile platform and objects on a left lane in the direction of the partial route planned by the mobile platform are only displayed and are not highlighted. For example, the display brightness of the objects is decreased or the objects are displayed in gray. In this way, users may be emphatically reminded of objects that constrain the current control behavior or decision of the mobile platform or traffic participants that affect the current control behavior or decision of the mobile platform, to correspondingly adjust the path or control the speed of the mobile platform on the target path.

In some embodiments, the differentiated identifiers change dynamically according to changes of the degrees of constraint. With the change of state information of the mobile platform and/or state information of objects around the mobile platform, the degrees of constraint of the objects around the mobile platform on the movement of the mobile platform on the target path will change accordingly. For example, under the influence of one or more factors such as a case where the motion direction of the mobile platform is changed or a case where an object around the mobile platform moves out of the preset distance range of the mobile platform, the identifier of object A, which is originally highlighted, will be downplayed, and the identifier of object B, which is originally downplayed, will be highlighted. By dynamic changes of the differentiated identifiers, changes of constraint of the object around the mobile platform on the movement of the mobile platform on the target path can be represented in real time, reminding users to pay their attention to objects that require special attention currently to guarantee the traveling safety.

In addition, the present disclosure further provides a control method for a mobile platform, including:
acquiring a target position;
determining, based on the target position, a target path along which the mobile platform moves;
acquiring real-time sensing information associated with the mobile platform and high-definition map information associated with the target path;
matching the real-time sensing information with the high-definition map information to determine positioning information of the mobile platform;
acquiring historical motion information associated with the target path; and
generating, based on the positioning information and the historical motion information, a control instruction used for controlling the mobile platform to move along the target path.

Optionally, the historical motion information is generated based on surrounding environments and travel trajectories acquired when the mobile platform previously travels on the target path and/or other road sections. Optionally, the historical motion information includes one or more of the following information: environmental information, historical travel trajectory information, and decision information associated with users. Illustratively, the historical motion information may include steering navigation information of the mobile platform on the target path, abnormal obstacle information on the target path, or driving behavioral habit information of users. Optionally, the control instruction used for controlling the mobile platform to travel automatically is generated at least based on the positioning information of the mobile platform, the steering navigation information of the mobile platform on the target path, the abnormal obstacle information on the target path, and the driving behavioral habit information of users.

Optionally, in a case where the high-definition map information and/or the historical motion information is acquired, the mobile platform is controlled to enter an automatic control mode. Optionally, in a case where the real-time sensing information, the high-definition map information, and the historical motion information are not acquired or confidence levels of the acquired real-time sensing information, high-definition map information, and historical motion information are not in line with a preset condition, one or more of the following operations are performed: determining pose change information of the mobile platform, and generating the control instruction based on the pose change information; generating safety prompt information to give a prompt to users; and generating a control mode switching instruction to switch a control mode of the mobile platform.

In the embodiments of the present disclosure, a solution for autonomous navigation based on the fusion of historical motion data and high-definition map information is proposed, through which accurate positioning of the mobile platform may be determined in a complex and changeable scenario to generate a safer and more rational control instruction, thereby improving the autonomous navigation accuracy of the mobile platform, better conforming to user habits, and improving the user experience. Further, automatic driving problems in urban areas such as limited coverage of a high-definition map and low accuracy of historical motion information can be effectively solved, and more accurate autonomous navigation can be performed automatically based on acquired information without being sensed by users.

In some embodiments, any one of the real-time sensing information, the high-definition map information, and the historical motion information is determined by at least one of the following: determining the information based on a sensor equipped on the mobile platform; or acquiring the information from a third-party device based on a communication device equipped on the mobile platform. Optionally, the third-party device comprises an aerial mobile terminal and/or a ground mobile terminal. Optionally, the high-definition map information comprises offline high-definition map information or online high-definition map information.

In some embodiments, the real-time sensing information is determined based on traveling of the mobile platform on the target path for a preset distance.

In some embodiments, if no historical motion information is available while the high-definition map information is available, a control system of the mobile platform automatically transitions to automatic driving based on the high-definition map information, and related information is recorded background to generate historical motion information. If neither the historical motion information nor the high-definition map information is available, users are prompted to drive the mobile platform manually. During automatic driving or manual driving of the mobile platform, both the surrounding environment and the travel trajectory may be acquired to generate the historical motion information associated with the target path.

Specific details for implementing the above control method may be referred to the description in the above embodiments and will not be repeated here.

In addition, the present disclosure further provides a control method for a mobile platform, including:
acquiring a target path along which the mobile platform moves, and acquiring target information including high-definition map information and historical motion information, which are associated with the target path; and generating, based on the target information, a control instruction for controlling the mobile platform to move along the target path.

Optionally, the target location may be acquired prior to obtaining the target path, and the target path for the mobile platform's movement may then be determined based on the target location. Optionally, the target information include at least high-definition map information, historical motion information, and real-time sensing information. Optionally, the mobile platform is equipped with sensors, and the target information is determined based on the sensors; and/or, the mobile platform is equipped with communication devices, and the real-time perception information is acquired from third-party devices via the communication devices. Optionally, the third-party device includes aerial mobile terminals and/or ground mobile terminals. Optionally, the high-definition map information includes offline high-definition map information or online high-definition map information. Optionally, the positioning information of the mobile platform is determined based on at least one of the high-definition map information and the historical motion information. Optionally, the real-time perception information is matched with the high-definition map information to determine the positioning information of the mobile platform. Optionally, determining the positioning information of the movable platform includes: acquiring real-time sensing information associated with the movable platform; matching the real-time sensing information with at least one of the high-definition map information and the historical motion information to determine the positioning information of the movable platform. Optionally, control instructions may be generated based on the positioning information and the historical motion information, wherein the control instructions are used to control the movable platform to move along the target path. Optionally, the real-time perception information is determined based on the mobile platform traveling a predetermined distance along the target path. Optionally, the historical motion information includes one or more of the following: environmental information, historical travel trajectory information, and user-related decision information. Optionally, the mobile platform is equipped with sensors, and the historical motion information is determined based on the sensors. Optionally, the mobile platform is equipped with a communication device, and the historical motion information is determined based on the communication device. Optionally, the system also controls the mobile platform to enter an automatic control mode in response to acquiring at least one type of target information. Optionally, in response to failing to acquire target information, or if the confidence level of acquired target information does not meet preset conditions, the system performs one or more of the following operations: determines the platform's pose change information; generates control commands based on the pose change information; generates safety alert information to notify the user; generate control mode switching commands to switch the mobile platform's control mode. Optionally, during the mobile platform's movement along the target path, one or more of the following pieces of information may be displayed on the interactive control: a visual representation for representing the relative positional relationship and/or relative height relationship between the mobile platform and other surrounding objects; an identifier generated based on control commands to represent the planned path of the mobile platform along the target path; an identifier representing the traffic status of the channel where the mobile platform is located, with the traffic status identifier distinguished from those of other channels along the target path; prompt information indicating specific locations along the target path, generated prior to the mobile platform reaching those locations. Optionally, during the mobile platform's movement along the target path, differentiated identifiers may be generated based on the varying degrees of constraint imposed by surrounding objects on the platform's movement along the target path. Optionally, these differentiated identifiers may dynamically change according to variations in the degree of constraint.

Specific details for implementing the above control method may be referred to the description in the above embodiments and will not be repeated here.

In the embodiments of the present disclosure, if high-definition map information and historical motion information associated with the target path are acquired, control instructions for guiding the mobile platform along the target path can be flexibly generated based thereon, which enables safer, more rational, and higher-accuracy autonomous navigation of the mobile platform along the target path.

In the embodiments of the present disclosure, the mobile platform may perform positioning by means of a positioning module based on the high-definition map information and/or a positioning module based on the historical motion information, and automatically enter an automatic control mode as long as any one of the positioning modules succeeds in positioning. If the positioning modules both succeed in positioning, the high-definition map information and the historical motion information may be assigned with different weights for fused positioning, such that the positioning accuracy and flexibility are improved. If it is detected that the positioning modules malfunction or the positioning modules cannot determine positioning information, for example, the mobile platform enters a narrow alley, temporary positioning may be performed based on pose change information or users may be automatically prompted to take over the mobile platform or the control mode of the mobile platform may be automatically switched until the positioning modules acquire positioning information again. At this moment, the mobile platform autonomously switches to the automatic control mode. That is, the automatic mode of the mobile platform may be smoothly switched on a road section covered with the high-definition map information and a road section covered with the historical motion information without being sensed by users. The high-definition map information and the historical motion information may be fused to be verified to obtain map information, which is more in line with the application scenario and is associated with the target path, more accurate lane-level positioning information of the mobile platform on the target path may be further determined in conjunction with the online sensing information, and the mobile platform is controlled to autonomously move along the target path safely and rationally based on the map information and/or the positioning information. Accordingly, accurate positioning of the mobile platform may be determined in a complex scenario to generate a safer and more rational control instruction, thereby improving the autonomous navigation accuracy of the mobile platform, better conforming to user habits, and improving user experience. Further, automatic driving problems in urban areas such as limited coverage of a high-definition map and low accuracy of historical motion information can be effectively solved, and more accurate autonomous navigation can be performed automatically based on acquired information without being sensed by users.

In the embodiments of the present disclosure, corresponding user interaction is further designed during movement of the mobile platform along the target path, and one or more types of information may be indicated on an interactive control to more visually and conveniently display the state of the mobile platform and the surrounding environment, traffic condition, etc. of the mobile platform, so as to remind users to perform corresponding operations or assist the users in developing a control strategy of the mobile platform to ensure that the mobile platform travels along the target path safely and rationally.

Specific details for implementing the above control method may be referred to the description in the above embodiments and will not be repeated here.

The methods in the above embodiments may be combined without conflicts, and the combinations of the methods are not enumerated here.

As shown in FIG. 11, the embodiments of the present disclosure provide a control apparatus for a mobile platform, including a processor, a memory, and computer program instructions stored in the memory and executed by the processor, where the processor and the memory are connected by means of a bus. The processor, when calling the executable computer program instructions, may perform the control method according to any embodiment of the present disclosure.

Specifically, the processor may be a microcontroller unit (MCU), a central processing unit (CPU), or a digital signal processor (DSP) 501, among others. Specifically, the memory may be a flash chip, a read-only memory 502(ROM) disk, an optical disk, a USB flash drive, or a portable hard drive, among others. Specifically, the bus may be an I²C (Inter-integrated Circuit) bus.

Specifically, in some embodiments, the processor may perform the following steps when calling the executable program instructions:
acquiring a target path along which the mobile platform moves;
acquiring target information comprising high-definition map information and historical motion information, which are associated with the target path; and
generating, based on the target information, a control instruction for controlling the mobile platform to move along the target path.

In some embodiments, the target information further includes real-time sensing information associated with the mobile platform.

In some embodiments, the mobile platform is equipped with a sensor, and the target information is determined based on the sensor; and/or the mobile platform is equipped with a communication device, and the target information is acquired from a third-party device based on the communication device.

In some embodiments, the third-party device comprises an aerial mobile terminal and/or a ground mobile terminal.

In some embodiments, the high-definition map information includes offline high-definition map information or online high-definition map information.

In some embodiments, the processor is configured to, when generating control instruction based on the target information, perform:
determining positioning information of the mobile platform based on at least one of the high-definition map information and the historical motion information; and generating the control instruction based on the positioning information.

In some embodiments, the processor is configured to, when determining the positioning information of the mobile platform, perform:
acquiring real-time sensing information associated with the mobile platform; and matching the real-time sensing information with at least one of the high-definition map information and the historical motion information to determine the positioning information of the mobile platform.:
In some embodiments, the historical motion information includes one or more of the following information: environmental information, historical travel trajectory information, and decision information associated with users.

In some embodiments, the mobile platform is equipped with a sensor, and the target information is determined based on the sensor; and/or the mobile platform is equipped with a communication device, and the target information is acquired from a third-party device based on the communication device.

In some embodiments, the processor is further configured to: controlling the mobile platform to enter an automatic control mode in response to acquiring at least one of the target information.

In some embodiments, the processor is further configured to perform one or more of the following operations in response to not acquiring the target information or a confidence level of the acquired target information not meeting a preset condition:
determining pose change information of the mobile platform, and generating the control instruction based on the pose change information;
generating safety prompt information to give a prompt to users; and
generating a control mode switching instruction to switch a control mode of the mobile platform.

In some embodiments, the mobile platform is equipped with a visual sensor, and the pose change information of the mobile platform is determined based on environmental information acquired by the visual sensor.

In some embodiments, the processor is further configured to, when generating the control instruction based on the pose change information, perform:
determining positioning information of the mobile platform at a second time based on positioning information of the mobile platform at a first time and pose change information of the mobile platform at the second time with respect to the first time; and
generating the control instruction based on the positioning information of the mobile platform at the second time.

In some embodiments, the processor is further configured to indicate, on an interactive control, one or more of the following information during movement of the mobile platform along the target path:
a visual representation for representing relative position relations and/or relative height relations between the mobile platform and other objects around;
an identifier which is generated based on the control instruction and represents a planned route of the mobile platform on the target path;
an identifier for representing a traffic condition of a lane where the mobile platform is located, wherein the identifier for representing the traffic condition of the lane where the mobile platform is located is different from identifiers for representing traffic conditions of other lanes on the target path; and
prompt information for representing and prompting a specific position of the target path, wherein the prompt information is generated before the mobile platform moves to the specific position.

In some embodiments, the processor is further configured to generate, during movement of the mobile platform along the target path, differentiated identifies according to different degrees of constraint of objects around the mobile platform on the movement of the mobile platform along the target path.

In some embodiments, the differentiated identifiers change dynamically according to changes of the degrees of constraint.

In some embodiments, the processor may further perform the following steps when calling the executable program instructions:
acquiring a target position;
determining, based on the target position, a target path along which the mobile platform moves;
acquiring real-time sensing information associated with the mobile platform and high-definition map information associated with the target path;
matching the real-time sensing information with the high-definition map information to determine positioning information of the mobile platform;
acquiring historical motion information associated with the target path; and
generating, based on the positioning information and the historical motion information, a control instruction for controlling the mobile platform to move along the target path.

In some embodiments, any one of the real-time sensing information, the high-definition map information, and the historical motion information is determined by at least one of the following:
determining the information based on a sensor equipped on the mobile platform; or
acquiring the information from a third-party device based on a communication device equipped on the mobile platform.

In some embodiments, the third-party device comprises an aerial mobile terminal and/or a ground mobile terminal.

In some embodiments, the high-definition map information includes offline high-definition map information or online high-definition map information.

In some embodiments, the real-time sensing information is determined based on traveling of the mobile platform on the target path for a preset distance.

In some embodiments, the processor is further configured to control the mobile platform to enter an automatic control mode in response to acquiring the high-definition map information and/or the historical motion information.

In some embodiments, the processor is further configured to perform one or more of the following operations in response to not acquiring the real-time sensing information, the high-definition map information, and the historical motion information or confidence levels of the acquired real-time sensing information, high-definition map information and historical motion information not meeting a preset condition:
determining pose change information of the mobile platform, and generating the control instruction based on the pose change information;
generating safety prompt information to give a prompt to users; and
generating a control mode switching instruction to switch a control mode of the mobile platform.

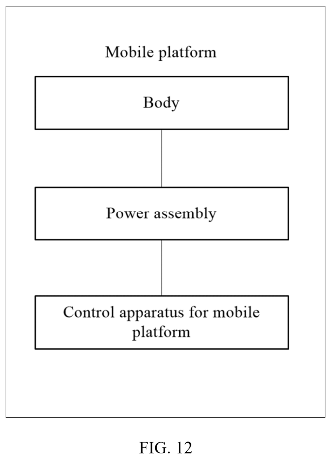

The embodiments of the present disclosure further provide a mobile platform. As shown in FIG. 12, the mobile platform includes a body, a power assembly, and a control apparatus for the mobile platform. The control apparatus includes a processor and a memory for storing processor-executable program instructions. The control apparatus includes the control apparatus for a mobile platform according to any embodiment of the present disclosure. The processor, when calling the executable program instructions, performs the control method according to any embodiment of the present disclosure. The mobile platform may be a vehicle, a flight vehicle, a ship, an intelligent robot, or other mobile devices. The mobile platform may be a manned mobile platform or an unmanned mobile platform.

Correspondingly, the embodiments of the present disclosure further provide a computer storage medium storing a program, where the program, when executed by a processor, implements the method according to any embodiment of the present disclosure.

The embodiments of the present disclosure may be in the form of a computer program product implemented on one or more storage media including program codes (including, but not limited to, a disk memory, a CD-ROM, an optical memory, etc.). The computer-available storage medium includes permanent, impermanent, mobile and immobile media, and may store information by any method or technique. The information may be computer-readable instructions, data structures, modules of programs, or other data. The computer storage medium may include, but are not limited to, for example, a phase change random access memory (PRAM), a static random access memory (SRAM), a dynamic random access memory (DRAM), other random access memories (RAMs), a read-only memory (ROM), an electrically erasable programmable read-only memory (EEPROM), a flash memory or other internal memories, a compact disc read-only memory (CD-ROM), a digital video disk (DVD) or other optical memories, a magnetic cassette tape, a disk memory or other magnetic storage devices, or other non-transmission media, and may store information accessible for computing devices.

It should be noted that, in this document, relational terms such as "first" and "second" are merely used to distinguish one entity or operation from another entity or operation, and do not necessarily require or imply any actual relationship or order between these entities or operations. The terms "include", "comprise", or any other variants thereof are intended to cover non-exclusive inclusion, such that a process, method, article, or apparatus including a series of elements not only includes those elements but also includes other elements not explicitly listed or elements inherent to such process, method, article, or apparatus. Without further limitations, an element defined by the phrase "comprising a..." does not exclude the existence of other identical elements in a process, method, article, or apparatus including the described element.

The method and apparatus in the embodiments of the present disclosure are introduced above, and the principle and implementation of the present disclosure are expounded with reference to specific examples. The description of the embodiments is merely used to help understand the method and core concept of the present disclosure. Those ordinarily skilled in the art may make modifications to the specific implementation and application scope according to the concept of the present disclosure. Therefore, the contents in the specification should not be construed as limitations of the present disclosure.

## Claims

1. A control method for a mobile platform, comprising:
acquiring a target path along which the mobile platform moves;
acquiring target information comprising high-definition map information and historical motion information, which are associated with the target path; and
generating, based on the target information, a control instruction for controlling the mobile platform to move along the target path.

2. The control method according to claim 1, wherein the target information further comprises real-time sensing information associated with the mobile platform.

3. The control method according to claim 1 or 2, wherein the mobile platform is equipped with a sensor, and the target information is determined based on the sensor; and/or
the mobile platform is equipped with a communication device, and the target information is acquired from a third-party device based on the communication device.

4. The control method according to claim 3, wherein the third-party device comprises an aerial mobile terminal and/or a ground mobile terminal.

5. The control method according to claim 1, wherein the high-definition map information comprises offline high-definition map information or online high-definition map information.

6. The control method according to claim 1 or 2, wherein generating the control instruction based on the target information comprises:
determining positioning information of the mobile platform based on at least one of the high-definition map information and the historical motion information; and
generating the control instruction based on the positioning information.

7. The control method according to claim 6, wherein determining the positioning information of the mobile platform comprises:
acquiring real-time sensing information associated with the mobile platform; and
matching the real-time sensing information with at least one of the high-definition map information and the historical motion information to determine the positioning information of the mobile platform.

8. The control method according to claim 2 or 7, wherein the real-time sensing information is determined based on traveling of the mobile platform on the target path for a preset distance.

9. The control method according to claim 1, wherein the historical motion information comprises one or more of the following information:
environmental information, historical travel trajectory information, and decision information associated with users.

10. The control method according to claim 1, further comprising:
controlling the mobile platform to enter an automatic control mode in response to acquiring at least one of the target information.

11. The control method according to claim 1, further comprising:
performing one or more of the following operations in response to not acquiring the target information or a confidence level of the acquired target information not meeting a preset condition:
determining pose change information of the mobile platform, and generating the control instruction based on the pose change information;
generating safety prompt information to give a prompt to users; and
generating a control mode switching instruction to switch a control mode of the mobile platform.

12. The control method according to claim 11, wherein the mobile platform is equipped with a visual sensor, and the pose change information of the mobile platform is determined based on environmental information acquired by the visual sensor.

13. The control method according to claim 11, wherein generating the control instruction based on the pose change information comprises:
determining positioning information of the mobile platform at a second time based on positioning information of the mobile platform at a first time and pose change information of the mobile platform at the second time with respect to the first time; and
generating the control instruction based on the positioning information of the mobile platform at the second time.

14. The control method according to claim 1, further comprising:
indicating, on an interactive control, one or more of the following information during movement of the mobile platform along the target path:
a visual representation for representing relative position relations and/or relative height relations between the mobile platform and other objects around;
an identifier which is generated based on the control instruction and represents a planned route of the mobile platform on the target path;
an identifier for representing a traffic condition of a lane where the mobile platform is located, wherein the identifier for representing the traffic condition of the lane where the mobile platform is located is different from identifiers for representing traffic conditions of other lanes on the target path; and
prompt information for representing and prompting a specific position of the target path, wherein the prompt information is generated before the mobile platform moves to the specific position.

15. The control method according to claim 1, further comprising:
generating, during movement of the mobile platform along the target path, differentiated identifies according to different degrees of constraint of objects around the mobile platform on the movement of the mobile platform along the target path.

16. The control method according to claim 15, wherein the differentiated identifiers change dynamically according to changes of the degrees of constraint.

17. A control method for a mobile platform, comprising:
acquiring a target position;
determining, based on the target position, a target path along which the mobile platform moves;
acquiring real-time sensing information associated with the mobile platform and high-definition map information associated with the target path;
matching the real-time sensing information with the high-definition map information to determine positioning information of the mobile platform;
acquiring historical motion information associated with the target path; and
generating, based on the positioning information and the historical motion information, a control instruction for controlling the mobile platform to move along the target path.

18. The control method according to claim 17, wherein any one of the real-time sensing information, the high-definition map information, and the historical motion information is determined by at least one of the following:
determining the information based on a sensor equipped on the mobile platform; or
acquiring the information from a third-party device based on a communication device equipped on the mobile platform.

19. The control method according to claim 18, wherein the third-party device comprises an aerial mobile terminal and/or a ground mobile terminal.

20. The control method according to claim 17, wherein the high-definition map information comprises offline high-definition map information or online high-definition map information.

21. The control method according claim 17, wherein the real-time sensing information is determined based on traveling of the mobile platform on the target path for a preset distance.

22. The control method according to claim 17, wherein the historical motion information comprises one or more of the following information:
environmental information, historical travel trajectory information, and decision information associated with users.

23. The control method according to claim 17, further comprising:
controlling the mobile platform to enter an automatic control mode in response to acquiring the high-definition map information and/or the historical motion information.

24. The control method according to claim 17, further comprising:
performing one or more of the following operations in response to not acquiring the real-time sensing information, the high-definition map information, and the historical motion information or confidence levels of the acquired real-time sensing information, high-definition map information and historical motion information not meeting a preset condition:
determining pose change information of the mobile platform, and generating the control instruction based on the pose change information;
generating safety prompt information to give a prompt to users; and
generating a control mode switching instruction to switch a control mode of the mobile platform.

25. The control method according to claim 17, further comprising:
indicating, on an interactive control, one or more of the following information during movement of the mobile platform along the target path:
a visual representation for representing relative position relations and/or relative height relations between the mobile platform and other objects around;
an identifier which is generated based on the control instruction and represents a planned route of the mobile platform on the target path;
an identifier for representing a traffic condition of a lane where the mobile platform is located, wherein the identifier for representing the traffic condition of the lane where the mobile platform is located is different from identifiers for representing traffic conditions of other lanes on the target path; and
prompt information for representing and prompting a specific position of the target path, wherein the prompt information is generated before the mobile platform moves to the specific position.

26. The control method according to claim 17, further comprising:
Generating, during movement of the mobile platform along the target path, differentiated identifies according to different degrees of constraint of objects around the mobile platform on the movement of the mobile platform along the target path.

27. The control method according to claim 26, wherein the differentiated identifies change dynamically according to changes of the degrees of constraint.

28. A control apparatus for a mobile platform, comprising:
a processor; and
a memory for storing processor-executable program instructions, wherein
the processor, when calling the executable program instructions, performs the control method according to any one of claims 1 to 27.

29. A mobile platform, comprising:
a body;
a power assembly; and
a control apparatus for the mobile platform, comprising a processor and a memory that stores processor-executable program instructions, wherein the processor, when calling the executable program instructions, performs the control method according to any one of claims 1 to 27.

30. A computer-readable storage medium storing a computer program, wherein the computer program, when executed by a processor, is configured to implement the control method according to any one of claims 1 to 27.
